# FASCICULE DE BREVET EUROPEEN

(11) **EP 1 211 947 B1**
(45) Date de publication et mention de la délivrance du brevet: **03.09.2003**
(21) Numéro de dépôt: 00964307.3
(22) Date de dépôt: 15.09.2000
(51) Int. Cl.: A23C 9/123, A23C 19/032

(54) **UTILISATION DE SOUCHES STREPTOCOCCUS THERMOPHILUS INCAPABLES D'HYDROLYSER L'UREE DANS DES PRODUITS LAITIERS**
VERWENDUNG VON STREPTOCOCCUS THERMOPHILUS STÄMMEN IN MILCHPRODUKTEN, DIE HARNSTOFF NICHT HYDROLISIEREN KÖNNEN
USE OF STRAINS OF STREPTOCOCCUS THERMOPHILUS WHICH ARE INCAPABLE OF HYDROLYZING UREA IN DAIRY PRODUCTS

(30) Priorité: 17.09.1999 FR 9911677
(43) Date de publication de la demande: 12.06.2002
(73) Titulaire: Société TEXEL, F-86220 Dange Saint Romain (FR); INSTITUT NATIONAL DE LA RECHERCHE AGRONOMIQUE (INRA), 75338 Paris Cédex 07 (FR)
(72) Inventeur: SEPULCHRE, Anne-Marie, F-37550 Saint-Avertin (FR); MONNET, Christophe, F-78370 Plaisir (FR); CORRIEU, Georges, F-78220 Viroflay (FR)
(74) Mandataire: Jacobson, Claude
(86) Numéro de dépôt international: FR0002577
(87) Numéro de publication internationale: WO01022828

(56) Documents cités:
- WO-A-96/10627
- W. TINSON: "Metabolism of streptococcus thermophilus" THE AUSTRALIAN JOURNAL OF DAIRY TECHNOLOGY, vol. 37, no. 1, 1982, pages 17-21, XP002141061 cité dans la demande
- B. BIANCHI SALVADORI: "Characteristics of some streptococcus thermophilus strains for the preparation of starters dehydrated for direct inoculation in cheese-vats" SCIENZA E TECNICA LATTIERO-CASEARIA, vol. 34, no. 4, 1983, pages 227-248, XP000920986
- A. ZOURARI: "Caractérisation de bactéries lactiques thermophiles isolées de yaourts artisanaux grecs" LE LAIT, vol. 77, no. 4, 1991, pages 445-461, XP000921064
- V. JUILLARD: "Mise en évidence d'une activité uréasique chez Streptococcus thermophilus" CANADIAN JOURNAL OF MICROBIOLOGY, vol. 34, no. 6, 1988, pages 818-822, XP000921155 cité dans la demande

## Description

La présente invention concerne la maîtrise de la cinétique d'acidification du lait lors de la fabrication de fromages ou de laits fermentés tels que des yaourts, par la mise en oeuvre de bactéries *Streptococcus thermophilus* au moins partiellement, de préférence totalement, incapables d'hydrolyser l'urée.

*Streptococcus thermophilus* est une bactérie lactique thermophile utilisée comme ferment lactique dans l'industrie laitière. Employée tout d'abord pour la fabrication de laits fermentés tels que le yaourt, elle est maintenant de plus en plus mise en oeuvre dans la production de fromages.

Cette bactérie transforme le lactose en acide lactique, et présente par là une activité acidifiante. Dans le cas des fromages notamment, cette acidification non seulement favorise l'action de la présure et la synérèse du caillé mais encore inhibe la croissance de nombreuses bactéries indésirables, dont certaines sont des bactéries pathogènes, et permet même plus ou moins rapidement leur élimination.

L'activité acidifiante de cette bactérie est cependant doublée d'une activité d'hydrolyse de l'urée, activité qui affecte la cinétique d'acidification. Tinson et al (1982a) ont montré que la réaction d'hydrolyse de l'urée, donnant du dioxyde de carbone et de l'ammoniaque, induisait une diminution temporaire de la vitesse d'acidification, mesurée par une sonde de pH. Les auteurs de cet article en concluent qu'on ne peut pas utiliser les changements de pH pour mesurer la production d'acide lactique dans des cultures de *S. thermophilus*, car les résultats qu'on obtiendrait seraient erronés en raison de la production d'ammoniaque. Par ailleurs Spinnler et Corrieu en 1989 ont observé que l'ajout d'urée conduisait à une baisse de la vitesse d'acidification.

A l'échelle industrielle, l'hydrolyse de l'urée par *Streptococcus thermophilus* pose un certain nombre de problèmes.

En effet, dans les fabrications fromagères par exemple, les opérations technologiques (découpage du caillé, brassage etc.) doivent avoir lieu à des valeurs de pH données, mais en pratique, ces opérations sont généralement réalisées à des temps déterminés. De ce fait, les variations d'activité acidifiante dues à l'hydrolyse de l'urée entraînent des défauts et des variabilités importantes dans les fromages (texture, taux d'humidité, affinage). Martin et al (1997) ont ainsi observé que les variations des teneurs en urée, provoquaient des modifications dans les cinétiques d'acidification et dans la texture des fromages de type reblochon, confirmant les résultats obtenus par Spinnler et Corrieu (1989).

En outre, la production d'ammoniaque augmente le temps nécessaire pour atteindre un pH donné. Ceci se traduit par une immobilisation plus importante du matériel ainsi que par une augmentation du risque de contamination par des micro-organismes indésirables.

Par ailleurs, il est souhaitable que le lactosérum de fromagerie ne contienne pas une quantité excessive d'ammoniaque, car ce lactosérum est souvent utilisé en alimentation animale.

Ce phénomène est difficilement maîtrisable, notamment parce que la teneur du lait en urée est variable (généralement de 2 à 8 mM) et qu'elle dépend en particulier de l'alimentation du bétail. Pour pallier ce problème, Martin et al (1997) ont proposé de mesurer les teneurs en urée du lait et d'adapter ensuite les paramètres de fabrication. Cependant la mise en oeuvre d'un tel système de dosage de l'urée serait très contraignante, et ne résoudrait de toute façon pas les inconvénients dus à un ralentissement de la vitesse d'acidification en présence d'urée (durée d'immobilisation plus importante du matériel, augmentation des risques de contamination etc.) et à une teneur élevée du lactosérum en ammoniaque.

Les auteurs de la présente invention ont mis en évidence que l'utilisation de souches *Streptococcus thermophilus* n'hydrolysant pas, ou pas totalement, l'urée, comme ferments lactiques dans la production de produits laitiers, permettait de résoudre les problèmes précités. Ces souches sont désignées "souches ur(-)", dans la suite de cette demande.

Jusqu'à présent, les seules souches *Streptococcus thermophilus* ur(-) décrites sont la souche CNRZ 407 (Juilliard et al, 1988) et la souche mutante isolée par Tinson et al (1982b). Cependant, les informations connues relatives à ces deux souches ne permettent pas de se rendre compte de l'intérêt technologique des souches ur(-).

La présente invention a donc pour objet l'utilisation d'au moins une souche *Streptococcus thermophilus* au moins partiellement, de préférence totalement, incapable d'hydrolyser l'urée, lors de la fabrication de fromages ou de produits laitiers fermentés tels que des yaourts, pour obtenir une cinétique d'acidification substantiellement indépendante de la teneur du lait en ses composants.

Dans le cadre de la présente invention, on entend par "la cinétique d'acidification" la variation du pH du milieu de fermentation en fonction du temps.

Par « teneur du lait en ses composants», on entend en particulier les teneurs en urée des laits, qui diffèrent d'un lait à l'autre, selon l'origine de l'animal ou son alimentation. On entend également les teneurs en d'autres composants du lait qui sont impliqués dans le métabolisme de l'urée. Parmi ces composants, on peut citer par exemple le nickel ou le cobalt. Ces composants peuvent être présents naturellement dans la matière première utilisée (le lait) ou avoir été ajoutés.

La présente invention a également pour objet un procédé pour obtenir, lors de la fabrication de fromages ou de produits laitiers fermentés tels que des yaourts, une cinétique d'acidification substantiellement indépendante de la teneur du lait en ses composants, dans lequel on incorpore au lait au moins une souche *Streptococcus thermophilus*, au moins partiellement, de préférence totalement, incapable d'hydrolyser l'urée.

Les souches *Streptococcus thermophilus* ur(-) mises en oeuvre conformément à la présente invention peuvent être obtenues par un traitement mutagène ou par mutation spontanée, ou encore être isolées dans la nature.

Les souches 298-K et 298-10, qui sont respectivement un mutant spontané et un mutant obtenu après traitement mutagène, ont été déposées à la CNCM le 14 septembre 1999 sous les numéros 1-2311 et 1-2312, respectivement.

Toute souche ur(-) criblée selon le protocole de Tinson et al (1982b), ou de préférence selon le protocole décrit dans l'exemple I, peut également être utilisée.

Les souches *Streptococcus thermophilus* ur(-) peuvent être utilisées seules ou en mélange avec d'autres microorganismes tels que des lactocoques, des lactobacilles, ou tout autre microorganisme utilisable dans l'industrie laitière.

Les auteurs de la présente invention ont montré que l'intérêt des souches *Streptococcus thermophilus* ur(-) est multiple. En effet, ils ont mis en évidence que les mutants ur(-) permettent non seulement de maîtriser les variations des cinétiques d'acidification, mais qu'ils sont en outre stables et présentent une bonne croissance dans le lait.

Par ailleurs, les souches ur(-) permettent d'obtenir des cinétiques d'acidification du lait régulières, qui ne présentent pas de ralentissement temporaire, fonction de la concentration en urée, contrairement aux cinétiques observées avec les souches ur(+).

Les souches ur(-) ne produisent pas d'ammoniaque lors de leur croissance dans du lait, ce qui est avantageux dans l'optique d'une utilisation du lactosérum dans l'alimentation animale.

Enfin, les souches sélectionnées pour leur phénotype ur(-) présentent de manière surprenante des caractères acidifiants variables, par rapport aux cinétiques d'acidification observées avec les souches parentales.

Par "cinétique d'acidification variable", on entend une cinétique d'acidification par exemple plus rapide ou plus lente par rapport aux cinétiques d'acidification observées avec les souches parentales. On peut aussi parler "d'hétérogénéité" entre les cinétiques d'acidification des différents mutant ur(-) vis-à-vis des souches parentales.

L'invention a donc également pour objet un procédé de sélection de souches *Streptococcus thermophilus* utiles lors de la fabrication de fromages ou de produits laitiers fermentés, dans lequel des souches *Streptococcus thermophilus* mutantes, au moins partiellement, de préférence totalement incapables d'hydrolyser l'urée, permettant l'obtention d'une cinétique d'acidification substantiellement indépendante de la teneur du lait en ses composants, sont sélectionnées pour leur capacité à acidifier un lait selon des cinétiques d'acidification variables par rapport aux cinétiques d'acidification des souches parentales.

De manière générale, le choix des propriétés acidifiantes des souches ur(-) peut être effectué en fonction de la technologie de fabrication fromagère ou de laits fermentés, pour laquelle ces souches sont mises en oeuvre.

Ainsi, certaines souches ur(-) se caractérisent plus particulièrement par une absence du phénomène de post-acidification.

Pour d'autres souches, le temps nécessaire pour atteindre un pH donné s'avère plus court que pour les souches ur(+) parentales. Ainsi, cette propriété permet d'ensemencer le lait avec une souche mutante ur(-) à un taux inférieur au taux généralement utilisé pour la souche ur(+) parentale. Ce taux peut être inférieur d'environ 25 %, voire d'environ 50 % par rapport au taux qui serait utilisé pour la souche parentale.

La présente invention a donc pour objet un procédé selon l'invention, dans lequel on incorpore au lait au moins une souche *Streptococcus thermophilus* mutante au moins partiellement, de préférence totalement incapable d'hydrolyser l'urée, à un taux d'ensemencement inférieur au taux d'ensemencement utilisé pour la souche *Streptococcus thermophilus* parentale capable d'hydrolyser l'urée.

Les figures et exemples ci-après illustrent l'invention sans en limiter la portée.

### LEGENDE DES FIGURES :

La figure 1 représente des courbes d'acidification de lait écrémé reconstitué, obtenues avec la souche RD298 ur(+) ainsi qu'avec les mutants ur(-) spontanés (figure 1A) ou obtenus après un traitement au NTG (figure 1B).
La figure 2 représente les courbes d'acidification de lait écrémé reconstitué, obtenues avec la souche ST888 ainsi qu'avec les mutants ur(-) spontanés (figure 2A) ou obtenus après un traitement au NTG (figure 2B).
La figure 3 représente les courbes d'acidification de lait écrémé UHT obtenues avec la souche RD298 ainsi qu'avec les mutants ur(-) spontanés (figure 3A) ou obtenus après un traitement au NTG (figure 3B).
La figure 4 représente des courbes d'acidification de lait écrémé UHT, obtenues avec la souche ST888 ainsi qu'avec les mutants ur(-) spontanés (figure 4A) ou obtenus après un traitement au NTG (figure 4B).
La figure 5 représente les courbes d'acidification obtenues avec la souche RD298 (figure 5A) et les mutants ur(-) RD 298-K (figure 5B) et RD298-10 (figure 5C), sur du lait écrémé UHT supplémenté avec différentes quantités d'urée.
La figure 6 représente les courbes d'acidification obtenues avec la souche RD298 (figure 6A) et les mutants ur(-) RD 298-K (figure 6B) et RD298-10 (figure 6C), sur du lait écrémé UHT supplémenté ou non avec du nickel (10 µg/l de NiSO₄.7 H₂O).
La figure 7 représente les courbes d'acidification obtenues avec la souche RD672 et des mutants ur(-) issus de cette souche, sur du lait écrémé reconstitué.

### EXEMPLES :

### Exemple 1 :

### Méthode de criblage des bactéries ur(-) sur boîte de Pétri

Un milieu gélosé dont la composition est indiquée dans le tableau 1 est préparé et coulé dans des boîtes de Pétri d'un diamètre égal à 9 cm.

**Tableau 1 :**

| Composition du milieu de criblage. | |
|---|---|
| Tryptone^{a} | 2,5 g |
| Peptone pepsique de viande^{a} | 2,5 g |
| Peptone papaïnique de soja^{a} | 5 g |
| Extrait autolytique de levure^{b} | 2,5 g |
| Extrait de viande^{a} | 5 g |
| Sucre (glucose, lactose ou saccharose) | 5 g |
| Glycérophosphate de sodium.6H₂O | 19 g |
| Sulfate de magnésium | 0,25 g |
| Acide ascorbique | 0,5 g |
| Agar | 15 g |
| Eau distillée | 1 1 |

| | |
|---|---|
| ^{a} : Société Biokar | |
| ^{b} : Société Fischer Scientific | |

Le cas échéant, on peut ajouter à ce milieu un cofacteur de l'uréase. Ajuster le pH à 7,0 et autoclaver pendant 15 minutes à 115°C.

Les cellules de *St. thermophilus à* analyser sont ensemencées sur ce milieu de manière à obtenir environ 100 colonies par boîte de Pétri. Les cultures ont lieu en anaérobiose à une température de 35-45°C, de préférence 37-42°C.

Après deux jours de culture, on verse sur chaque boîte de pétri environ 20 ml d'une solution gélosée préparée de la façon suivante : dissoudre par chauffage 15 g d'agar dans 1 litre d'une solution de tampon phosphate de potassium à 50 mM (pH 6) supplémentée avec 100 mg/l de bleu de bromothymol, refroidir la solution à 50°C, ajouter 10 g d'urée et acidifier le milieu avec de l'acide chlorhydrique jusqu'à l'obtention d'une couleur jaune-orange.

Après solidification de la gélose, les boîtes de Pétri sont incubées 1 h à 37°C. Les clones ur(+) forment des halos de couleur bleue en raison de la production d'ammoniaque, alors que les clones ur(-) forment des colonies jaunes. Lorsque les mutants ur(-) sont recherchés, les clones ne formant pas de halo bleu sont récupérés et testés à nouveau sur le même milieu de criblage afin de confirmer le caractère ur(-). Il convient également de vérifier que ces mutants ne consomment pas l'urée (ou ne le consomment qu'en partie) lorsqu'ils sont cultivés dans du lait.

### Exemple 2 :

### Sélection de mutants du métabolisme de l'urée

Des mutants ne consommant pas l'urée, ou le consommant faiblement, ont été recherchés à partir des souches de *St. thermophilus* RD298, RD 672 et ST888. Deux approches ont été utilisées. Dans la première approche, les mutants ont été recherchés après un traitement avec un agent mutagène, alors que dans la seconde approche, des mutants spontanés ont été recherchés.

### a) Sélection à l'aide d'un agent mutagène

Le traitement mutagène est réalisé comme décrit ci-dessous.

Les souches sont cultivées à 42°C dans 5 ml de bouillon M17 (Terzaghi et Sandine, 1975). La culture est arrêtée en fin de phase exponentielle, et les cellules sont récupérées par centrifugation puis lavées avec du tampon phosphate 100 mM (pH 7). Les cellules sont ensuite récupérées dans 1 ml de tampon contenant une teneur variable en N-méthyl-N'-nitro-N-nitrosoguanidine (NTG) et incubées pendant 1 heure à 42°C. Les cellules sont ensuite lavées deux fois avec 5 ml de tampon et ensemencées sur le milieu de criblage de manière à obtenir environ 100 colonies par boîte de Pétri. Le criblage est réalisé comme décrit précédemment (exemple 1). Le tableau 2 décrit les résultats obtenus lors de 3 mutagenèses.

**Tableau 2 :**

| Sélection de mutants ur (-) après un traitement avec un agent mutagène (NTG). | | | | | |
|---|---|---|---|---|---|
| Souche de *St. thermo- philus* | Concentration en NTG utilisée (µg/ml) | Viabilité (% des cellules ayant survécu au NTG) | Nbre de colonies criblées | Nbre de clones ur(⁻) obtenus | proportion des clones ur(⁻) (%) |
| ST888 | 20 | 10 | 980 | 11 | 1,1 |
| ST888 | 5 | 48 | 1000 | 5 | 0,5 |
| RD672 | 50 | 41 | 10600 | 41 | 0,4 |
| RD298 | 50 | 16 | 3200 | 15 | 0,5 |

### b) Sélection de mutants spontanés

Dans une population de microorganismes, il existe souvent des mutants spontanés pour un gène ou un caractère donné. Ce type de mutant est très intéressant, car le fait qu'aucun agent mutagène n'ait été utilisé supprime le risque d'induction de mutations non recherchées (autres que pour le caractère étudié), qui pourraient altérer les aptitudes technologiques des souches. Cependant, la fréquence de mutants spontanés au sein d'une population pour un caractère donné est généralement très faible, de l'ordre de 1 sur 1 million (variable en fonction des souches et des caractères). De ce fait, la sélection de mutants spontanés nécessite généralement, soit la mise au point d'une méthode permettant de cribler un nombre très élevé de clones, soit de définir une procédure d'enrichissement des mutants. Aucune procédure d'enrichissement de mutants ur(-) n'a été *a priori* décrite. De plus, étant donné que la procédure de criblage sur boîte de Pétri ne permet pas d'analyser plus de 100 colonies de *St. thermophilus* par boîte, on pouvait s'attendre à ce que la sélection de mutants spontanés soit irréalisable, puisqu'il aurait fallu cribler plusieurs milliers, voire dizaines de milliers, de boîtes de pétri, pour avoir des chances d'isoler un mutant spontané. Or, les auteurs de la présente invention se sont aperçus que dans les cultures de *St. thermophilus,* la proportion de mutants ur(⁻) spontanés était élevée (environ 1 sur 2500 pour ST888, 1 sur 4000 pour RD672 et 1 sur 1200 pour RD298), et qu'il est donc possible d'isoler facilement ce type de mutant (tableau 3).

**Tableau 3 :**

| Sélection de mutants ur(-) spontanés. Le protocole utilisé est le même que celui décrit dans le paragraphe a) "sélection à l'aide d'un agent mutagène", sauf que l'agent mutagène est omis. | | | |
|---|---|---|---|
| Souche de *St*. *thermophilus* | Nbre de colonies criblées | Nbre de clones ur(-) obtenus | proportion des clones ur(-) (%) |
| ST888 | 16000 | 6 | 0,04 |
| RD298 | 7400 | 6 | 0,08 |
| RD672 | 24000 | 6 | 0,03 |

47 des 90 mutants obtenus ont été étudiés. Les résultats concernant la stabilité, la caractérisation enzymatique, ainsi que le comportement acidifiant de ces mutants sont décrits ci-dessous.

### Exemple 3:

### Propriétés des mutants ur(-)

### a) Stabilité des mutants

Pour pouvoir être utilisables dans un contexte industriel, les mutants ur(-) doivent être stables. Or il n'existait aucune donnée quant à la stabilité de mutants ur(-) de *St. thermophilus*. Les auteurs de la présente invention ont étudié la stabilité de 47 mutants issus des souches ST888, RD 672 et RD298. Les souches ont été repiquées quotidiennement dans 10 ml de bouillon M17, et cela pendant 20 jours. Les cultures étaient inoculées à 1 % et incubées à 42°C. L'ensemble des 20 repiquages représente environ 130 générations. Après le 20^{ème} repiquage, les souches ont été ensemencées dans du lait et l'on a déterminé si elles consommaient ou non l'urée (cultures de 15 h à 42°C). Les résultats sont présentés dans le tableau 4. On constate que les mutants ur(-), qu'ils soient obtenus par un traitement mutagène ou qu'il s'agisse de mutants spontanés, sont très stables. En effet, seules deux réversions ont été détectées pour les 47 mutants testés.

**Tableau 4 :**

| Etude de la stabilité des mutants ur(-). La consommation d'urée a été testée lors de cultures sur du lait, après 20 repiquages successifs dans du bouillon M17. | | | |
|---|---|---|---|
| Souche de *St. thermophilus* | Mutation | Nbre de mutants ur(-) testés | Nbre de mutants consommant l'urée après 20 repiquages |
| ST888 | NTG | 6 | 1 |
| ST888 | Spontanée | 6 | 0 |
| RD298 | NTG | 5 | 0 |
| RD298 | Spontanée | 6 | 0 |
| RD672 | NTG | 19 | 0 |
| RD672 | Spontanée | 5 | 1 |
| Total | / | 47 | 2 |

### b) Caractérisation enzymatique des mutants

Les souches étudiées ont été cultivées pendant 24 h, en anaérobiose et à 37 °C, dans un bouillon liquide dont la composition est indiquée dans le tableau 5. Les cellules ont été récupérées par centrifugation, lavées dans du tampon (HEPES 50 mM - EDTA 1 mM, pH 7,5), puis récupérées dans un volume de tampon représentant 2% du volume de la culture. L'activité uréasique a ensuite été mesurée sur des extraits acellulaires (traitement des cellules dans un broyeur à billes et récupération du surnageant de centrifugation pendant 5 min à 20000 g).

**Tableau 5 :**

| Composition du bouillon utilisé pour la préparation des extraits. | |
|---|---|
| Tryptone^{a} | 10 g |
| Extrait autolytique de levure^{b} | 5 g |
| Glycérophosphate de sodium, 6H₂O | 19 g |
| Acide ascorbique | 500 mg |
| Sulfate de magnésium | 250 mg |
| Sulfate de nickel.7H₂O | 10 mg |
| Glucose | 10 g |
| Eau distillée | 1 l |

| | |
|---|---|
| ^{a}: Société Biokar | |
| ^{b}: Société Fischer Scientific | |

Ajuster le pH à 7,0 et autoclaver pendant 15 minutes à 115°C.

Les mesures d'activité uréasique ont été réalisées à 37°C, dans du tampon HEPES 50 mM - EDTA 1 mM (pH 7,5). La réaction est déclenchée par l'ajout de 25 mM d'urée, et l'on dose l'ammoniaque produit en 20 minutes, en utilisant le réactif de Nessler. Les résultats sont exprimés en unités (U) d'activité uréase (une unité correspond à une micromole d'ammoniaque produite par minute) par milligramme de protéine.

Le tableau 6 présente les valeurs d'activité obtenues. Les mutants ur(-) ne présentaient pas d'activité uréasique détectable, à l'exception des mutants 298-3.17 et 888-1.5. Ces derniers correspondent à des mutants ayant un phénotype ur(+) en présence de nickel et ur(-) en absence de ce composé. Or, le milieu de culture utilisé pour la préparation des extraits acellulaires contenait du sulfate de nickel. Dans ces deux souches, la mutation porte probablement sur le système de transport du nickel ou sur le système permettant son incorporation dans le site actif de l'uréase.

Ces souches de St. *thermophilus* pourraient également présenter un phénotype ur(-) du fait d'une incapacité à transporter l'urée. De telles souches posséderaient donc toujours une activité uréasique mesurable dans des extraits acellulaires.

**Tableau 6 :**

| Mesure de l'activité uréasique d'extraits acellulaires obtenus à partir des souches parentales ainsi que des mutants ur(-). | | | | | |
|---|---|---|---|---|---|
| Souche parentale Mutant | Activité uréasique (U/mg) | Souche parentale Mutant | Activité uréasique (U/mg) | Souche parentale Mutant | Activité uréasique (U/mg) |
| RD298 | 0,94 | RD672 | 1,08 | ST888 | 0,95 |
| 298-10 | N.D. | 672-18(0) | N.D. | 888-A | N.D. |
| 298-K | N.D. | 672-47(0) | N.D. | 888-B | N.D. |
| 298-I | N.D. | 672-54(0) | N.D. | 888-C | N.D. |
| 298-J | N.D. | 672-19(0) | N.D. | 888-D | N.D. |
| 298-L | N.D. | 672-31(0) | N.D. | 888-1 | N.D. |
| 298-M | N.D. | 672-59(50) | N.D. | 888-2 | N.D. |
| 298-N | N.D. | 672-62(50) | N.D. | 888-2,6 | N.D. |
| 298-3,9 | N.D. | 672-61(50) | N.D. | 888-2,11 | N.D. |
| 298-3,3 | N.D. | 672-33(50) | N.D. | 888-2,9 | N.D. |
| 298-3,16 | N.D. | 672-55(50) | N.D. | 888-1,13 | N.D. |
| 298-3,17 | 0,58 | 672-53(50) | N.D. | 888-1,8 | N.D. |
| | | 672-70(50) | N.D. | 888-1,5 | 0,42 |
| | | 672-20(50) | N.D. | | |
| | | 672-50(50) | N.D. | | |
| | | 672-34(50) | N.D. | | |
| | | 672-22(50) | N.D. | | |
| | | 672-24(50) | N.D. | | |
| | | 672-10(50) | N.D. | | |
| | | 672-36(50) | N.D. | | |
| | | 672-60(50) | N.D. | | |
| | | 672-21(50) | N.D. | | |
| | | 672-27(50) | N.D. | | |
| | | 672-26(50) | N.D. | | |
| | | 672-41(50) | N.D. | | |
| N.D. Non Détecté | | | | | |

### c) Comportement acidifiant des mutants

Afin de démontrer l'intérêt technologique des souches ur(-), les auteurs de l'invention ont comparé leurs caractéristiques acidifiantes avec celles des souches parentales correspondantes.

Il a été observé les résultats suivants :
- contrairement aux souches parentales, les mutants ur(-) ne présentent pas un ralentissement temporaire de la vitesse d'acidification dû à l'hydrolyse de l'urée, leurs courbes d'acidification sont donc plus régulières ;
- Les cinétiques d'acidification du lait par les mutants ur(-) sont peu ou pas affectées par les teneurs en urée, en nickel et en cobalt ;
- par ailleurs, on observe une forte variabilité des activités acidifiantes entre les mutants ur(-), par rapport aux activités acidifiantes des souches parentales.

Le détail des résultats obtenus est présenté ci-dessous. Les cultures ont été ensemencées à 1% avec une préculture réalisée sur du lait écrémé reconstitué stérilisé, puis cultivées à 37°C.

### - Cultures dans du lait écrémé reconstitué :

Le lait a été reconstitué à 100 g/l et pasteurisé pendant 10 minutes à 90°C.

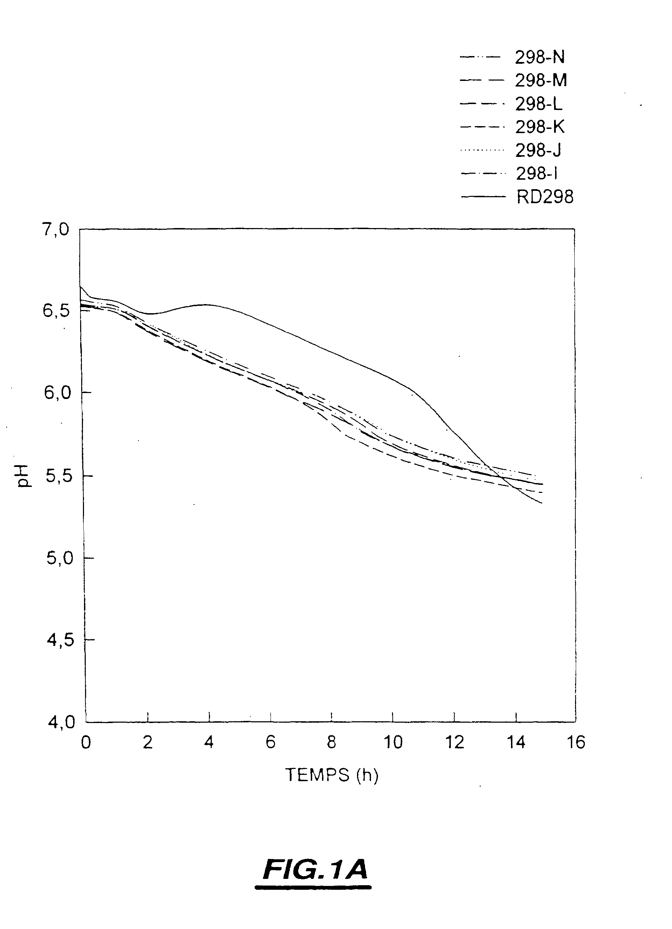

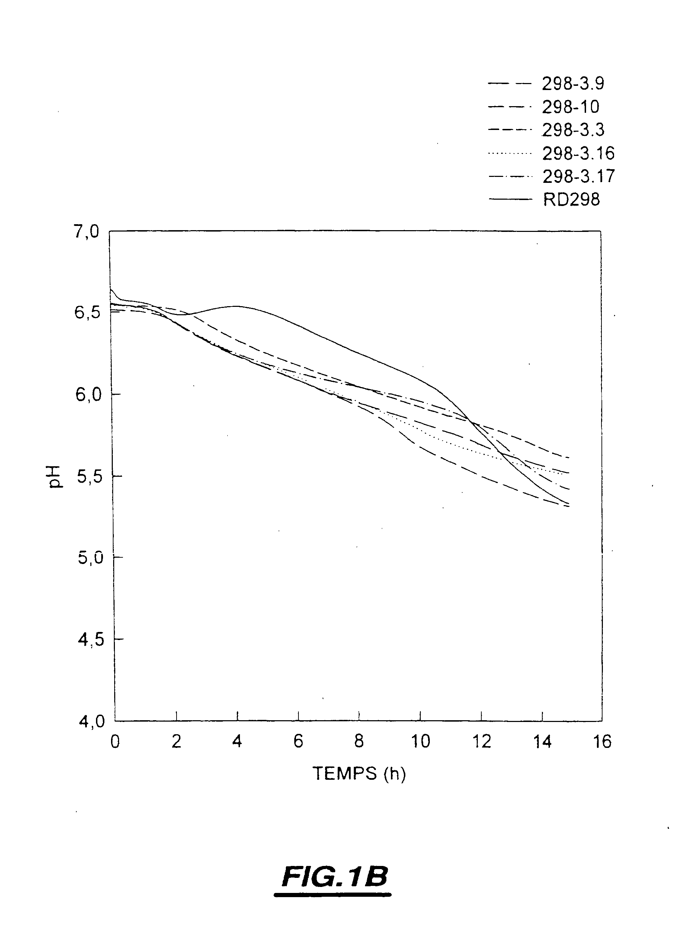

Après environ 2 heures de culture, on observe une remontée du pH dans la culture de la souche RD298 (figure 1). Les 6 mutants spontanés présentent une courbe d'acidification plus régulière, sans remontée de pH ni ralentissement temporaire de la vitesse d'acidification. A certains moments de la culture, le décalage d'acidification par rapport à la souche parentale atteint près de 4 heures. Ceci permet donc d'atteindre plus rapidement une valeur de pH donnée. L'intérêt de cette observation est majeure : si l'on veut atteindre un pH donné sans diminuer la durée d'incubation, on peut utiliser une souche ur(-) en diminuant la quantité d'ensemencement par rapport à la quantité utilisée avec une souche ur(+). Certains des mutants obtenus après un traitement au NTG ont un comportement similaire aux mutants spontanés, d'autres acidifient le milieu plus lentement (298-3.3) ou plus rapidement (298-10).

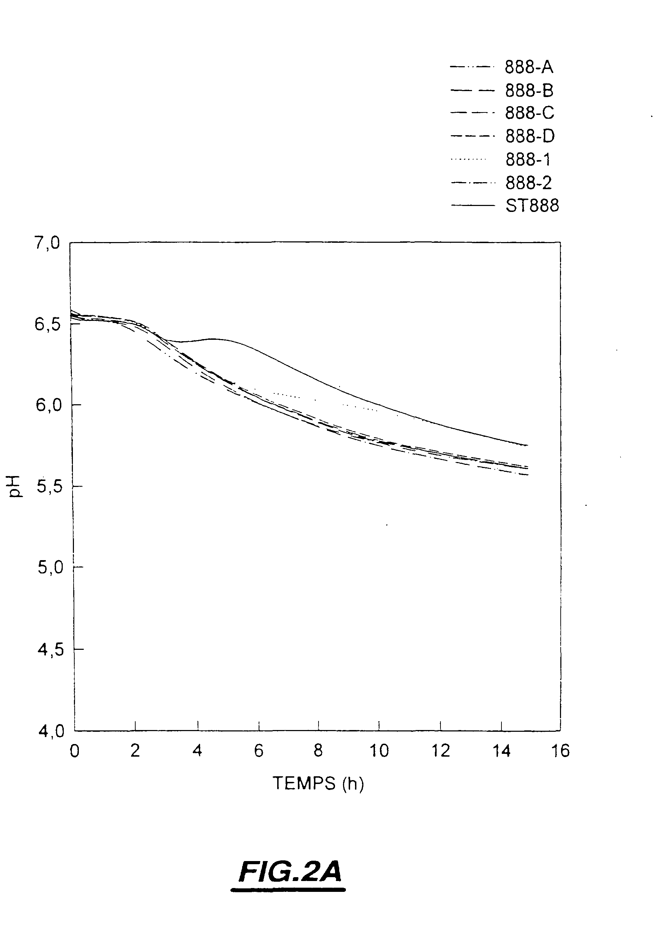

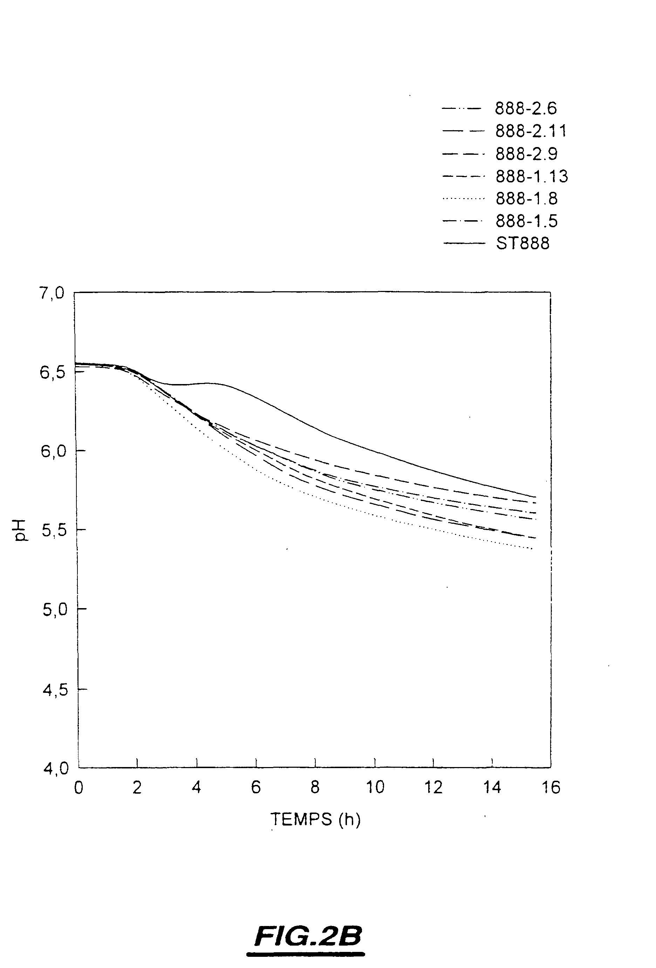

A l'exception du mutant 888-1, les mutants spontanés ur(-) de ST888 présentent la même courbe d'acidification. Comme pour RD298, on observe une acidification plus régulière et plus rapide avec les mutants (figure 2).

### - Cultures dans du lait écrémé stérilisé UHT (Lactel®) :

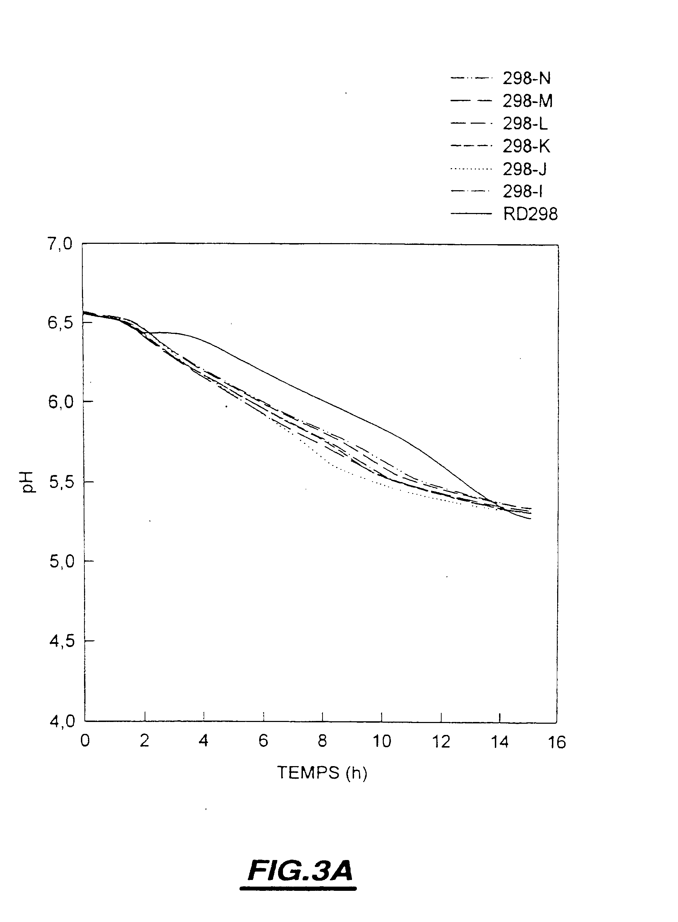

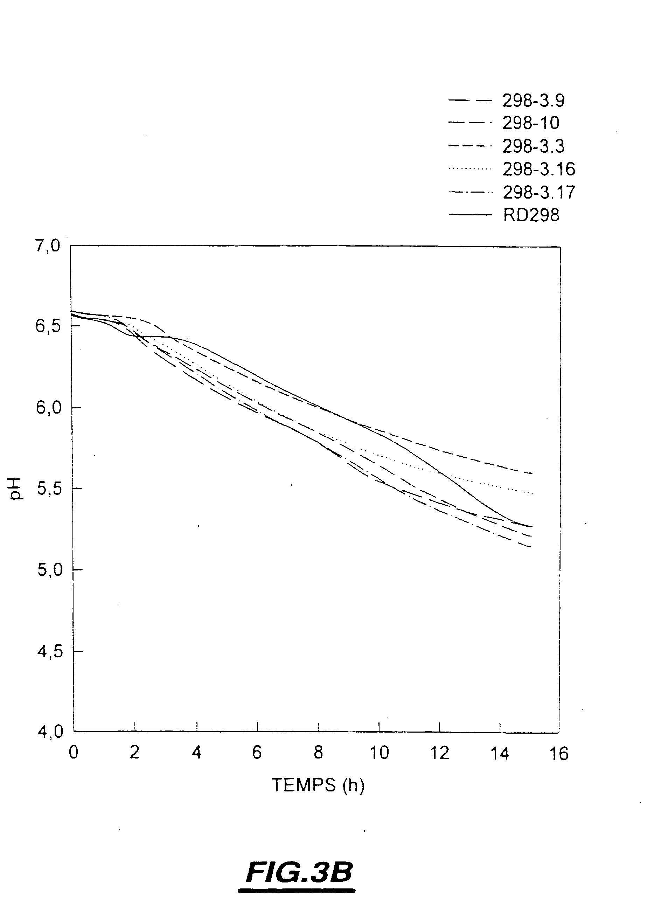

Comme pour les cultures réalisées dans du lait reconstitué, on observe un arrêt temporaire de la baisse du pH avec la souche RD298, ce phénomène étant absent dans les cultures des mutants ur(-) spontanés (figure 3).

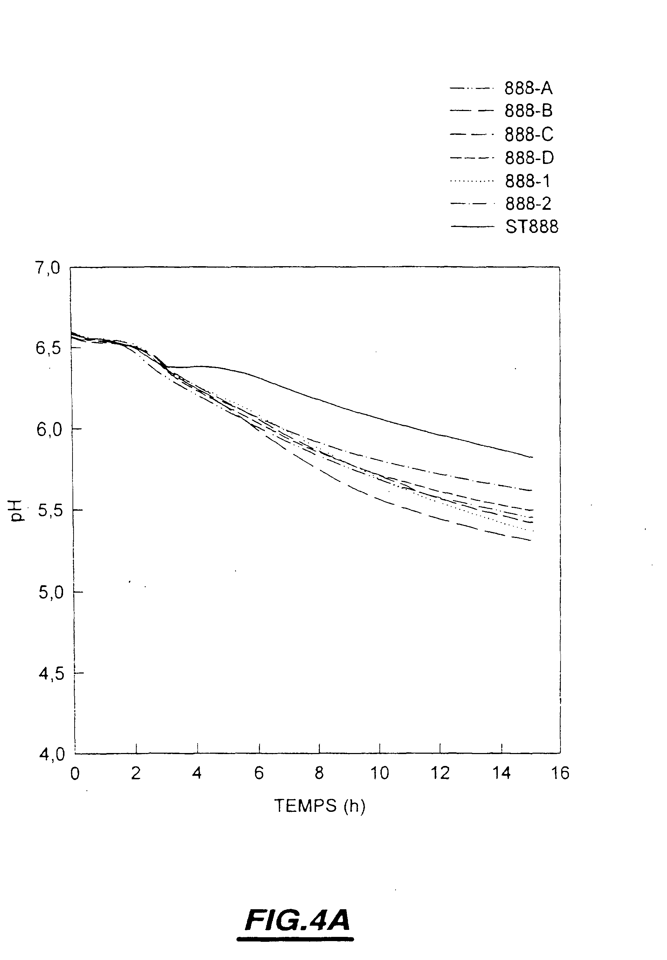

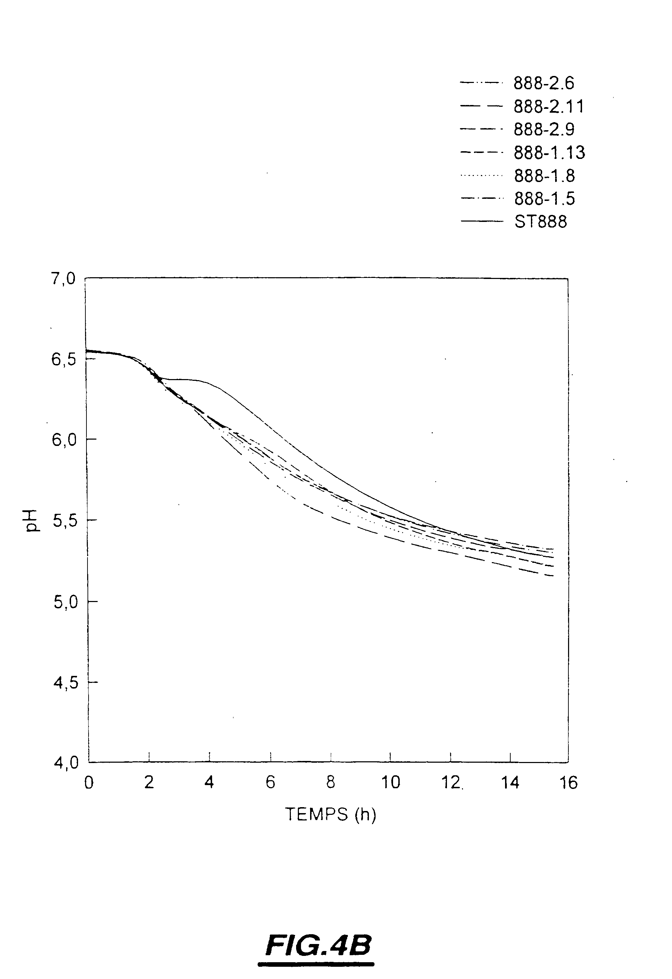

Les mutants ur(-) isolés à partir de ST888, qu'ils soient spontanés ou obtenus par traitement au NTG, ont une courbe d'acidification plus régulière que celle de la souche parentale (figure 4).

### - Effet de variations de la composition du lait sur les courbes d'acidification :

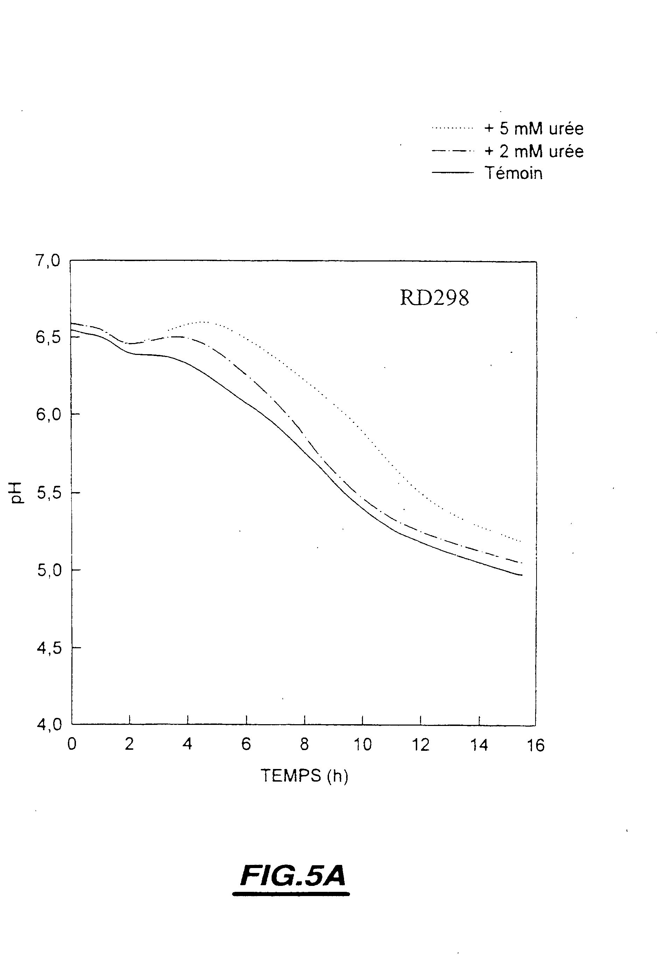

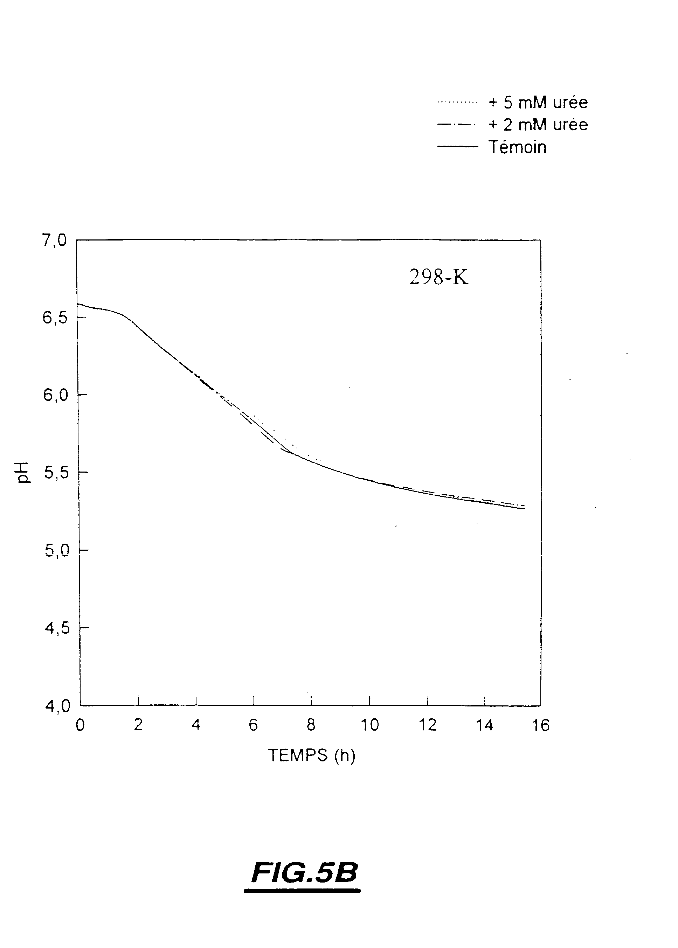

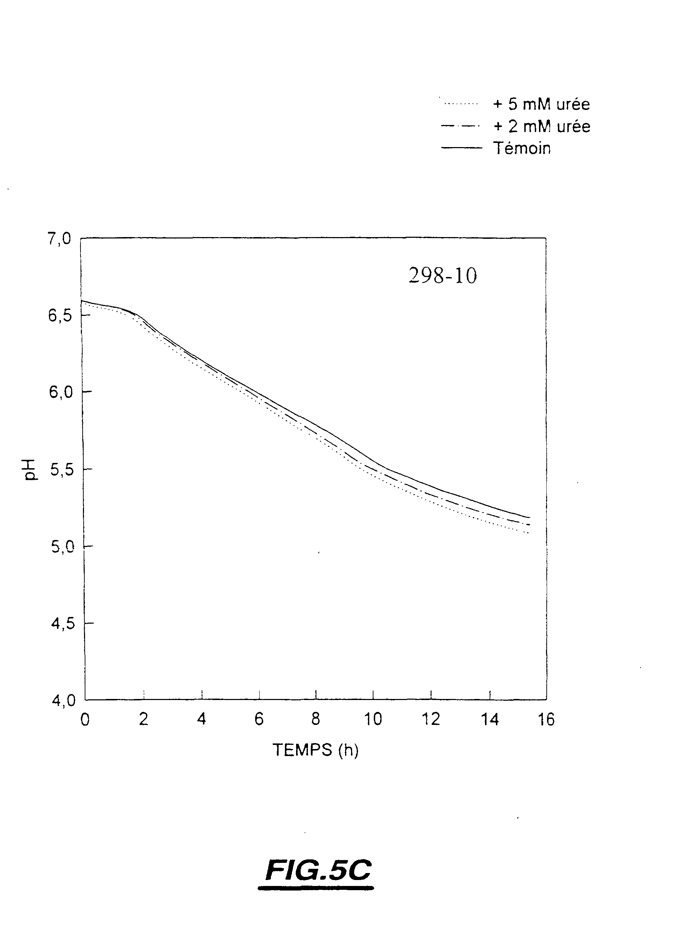

La souche RD298, ainsi que les mutants ur(-) 298-K et 298-10, ont été cultivés sur du lait écrémé stérilisé UHT supplémenté ou non avec différentes quantités d'urée. La concentration initiale du lait en urée était égale à 3 mM et les teneurs en urée des différentes cultures étaient comprises dans les zones de variation que l'on observe habituellement avec le lait de vache. On constate que, contrairement aux mutants ur(-), les courbes d'acidification obtenues avec la souche parentale sont très dépendantes de la teneur du lait en urée (figure 5).

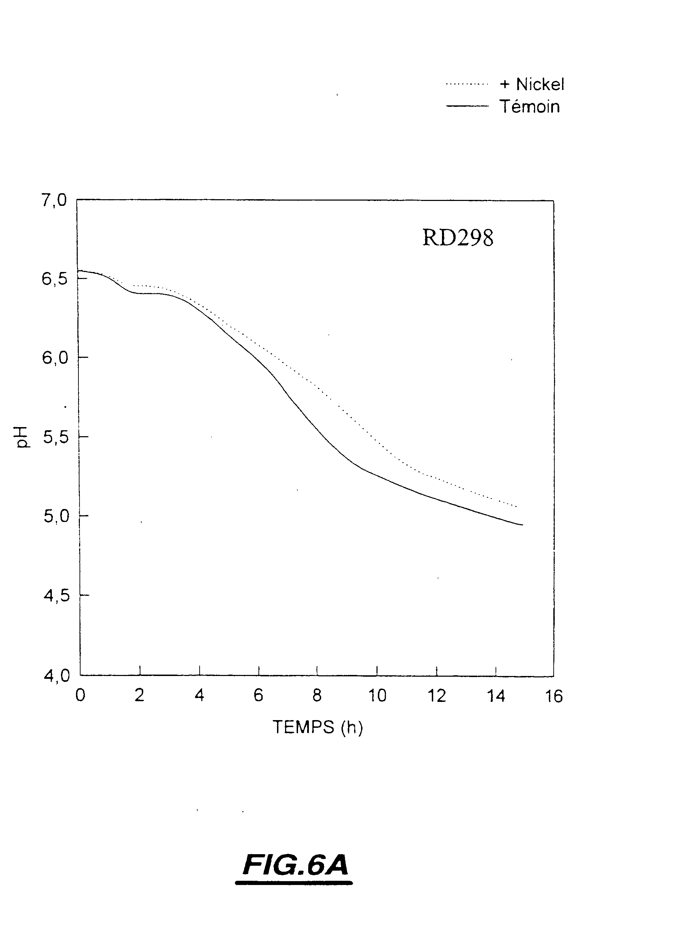

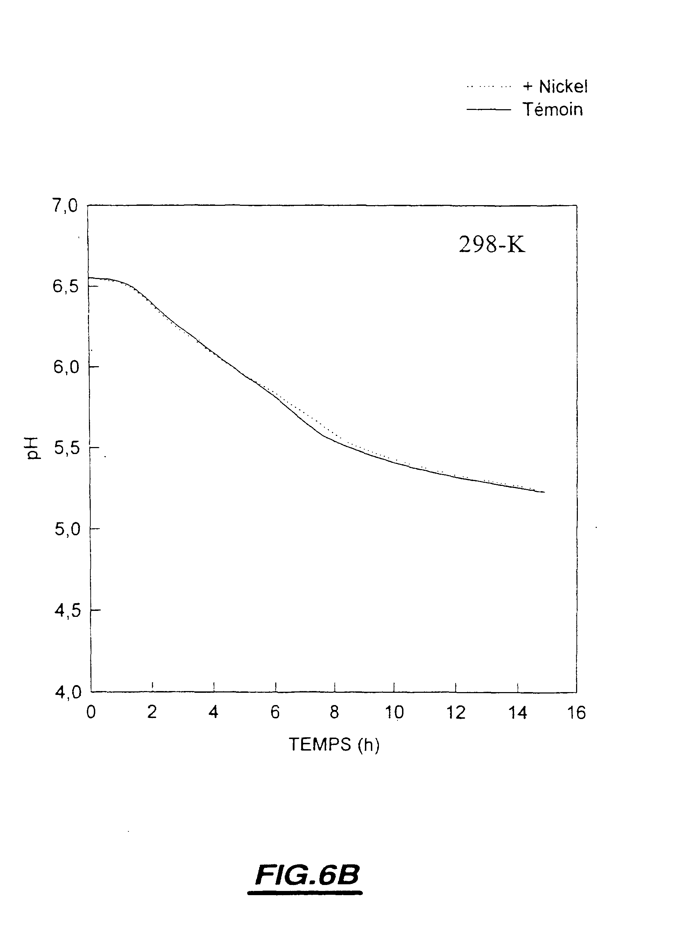

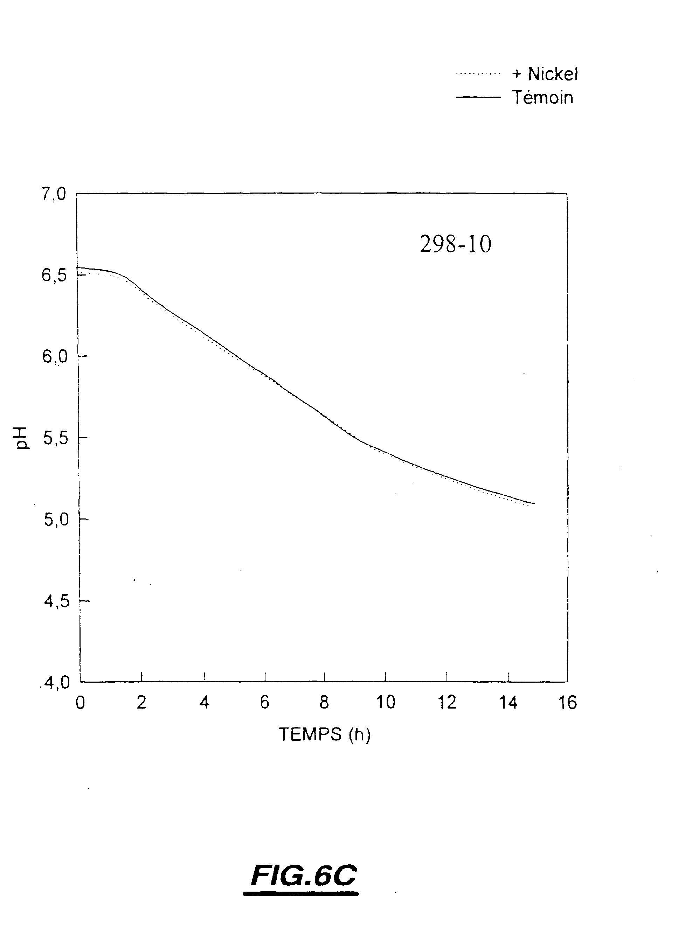

Les auteurs de la présente invention ont également observé que les courbes d'acidification obtenues avec la souche parentale sont dépendantes de la teneur du lait un nickel et en cobalt, ce qui n'est pas le cas pour les mutants ur(-) (figure 6).

### - Production d'ammoniaque :

Dans toutes les cultures décrites précédemment, on a observé que les souches RD298 et ST888 produisaient de l'ammoniaque et hydrolysaient la totalité de l'urée contenue dans le lait. Aucune production d'ammoniaque n'a été observée avec les mutants. Ceci indique que l'urée est le principal substrat utilisé par *St. thermophilus* pour produire de l'ammoniaque. Ainsi, l'utilisation de souches ur(-) permet d'éviter toute production d'ammoniaque due à *St. thermophilus* lors des fabrications fromagères. Par suite, les teneurs en ammoniaque des lactosérums de fromagerie peuvent être limitées.

### - Variabilité des activités acidifiantes :

Les auteurs de la présente invention ont observé de manière intéressante que les courbes d'acidification dans du lait écrémé reconstitué, obtenues avec plusieurs souches mutantes ur(-) présentaient d'importantes variations par rapport à la courbe obtenue avec leur souche parentale.

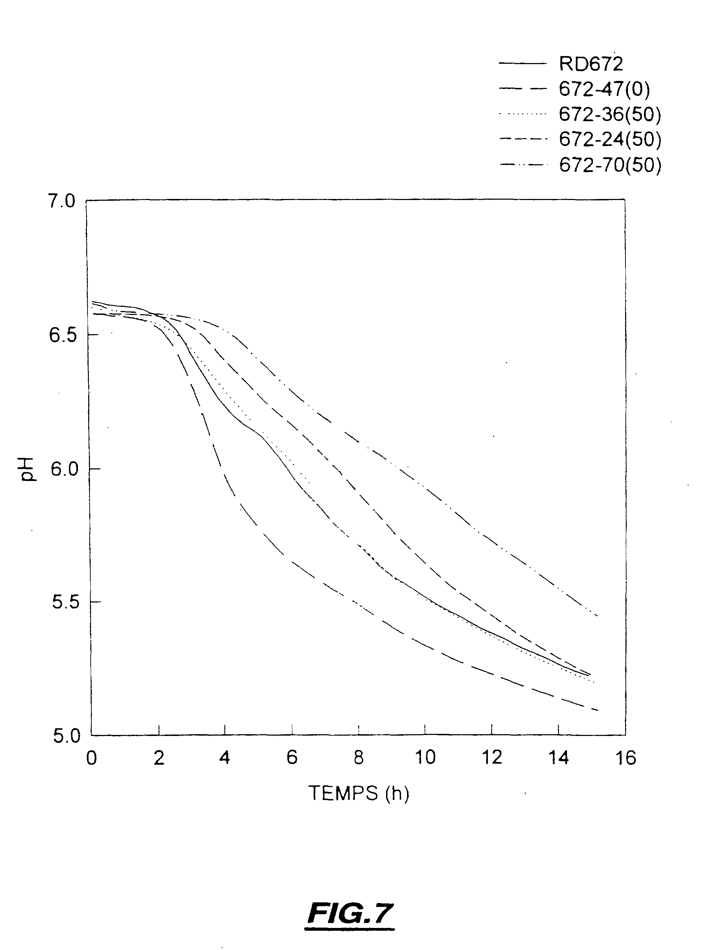

La figure 7 montre ainsi les courbes d'acidification de lait écrémé reconstitué, obtenues avec la souche RD 672, ainsi qu'avec des mutants ur(-) issus de cette souche.

La souche RD672 est peu acidifiante (technologie de type pâte molle solubilisée). Le mutant 672-47(0) est nettement plus acidifiant que la souche parentale, tandis que le mutant 672-36(50) présente une cinétique d'acidification assez proche. Le mutant 672-70(0) est nettement moins acidifiant que la souche parentale et le mutant 672-24(50) est un peu moins acidifiant que la souche parentale.

### Exemple 4 :

Fabrication de fromages de type "pâte molle solubilisée" mettant en oeuvre soit la souche industrielle ur(+) RD298 soit la souche mutante ur(-) 298-10 (mutante de RD298)

### a) Généralités.

Sous le nom générique de fromage, se trouve un très grand nombre de produits, ayant une technologie, une flore et des propriétés organoleptiques très diverses.

Sur le plan technologique, le fromage résulte dans un premier temps de la coagulation du lait obtenue par I'emprésurage, qui sera suivie de l'égouttage du coagulum ainsi obtenu (opérations mécaniques telles que le découpage, le brassage et le retournement).

Au cours de la fabrication, le développement des ferments ajoutés va provoquer un abaissement du pH du coagulum. La cinétique d'acidification (évolution du pH en fonction du temps) et la cinétique d'égouttage conditionnent la composition finale du caillé et donc les caractéristiques intrinsèques des fromages. C'est pourquoi, pour une technologie donnée, la maîtrise des cinétiques d'acidification et d'égouttage est essentielle.

### b) Spécificités de la technologie "pâte molle solubilisée" mise en oeuvre.

La fabrication des fromages de type "pâte molle solubilisée" correspond à la mise en oeuvre d'une technologie à dominance enzymatique (rôle important de la présure) avec des profils de température de fabrication spécifiques, tel que celui décrit dans le tableau 7.

La conduite de l'égouttage se caractérise par :
- Une acidification importante en début de procédé qui conditionne le niveau d'égouttage. L'acidification est assurée par *Streptococcus thermophilus ;* les pH cibles à atteindre aux différents stades de fabrication sont résumés dans le tableau 7.
- Une évacuation rapide du sérum accentuée par des opérations mécaniques (découpage, brassage et moulage du coagulum).
- Des opérations facilitant l'évacuation du lactosérum (retournement).

### c) Suivi des fabrications fromagères

Le tableau 7 résume les différentes étapes technologiques des fabrications réalisées et rapporte les temps technologiques qui ont été nécessaires dans chaque essai pour atteindre les pH cibles de chacune de ces étapes.

Deux laits distincts ont été mis en oeuvre contenant pour l'un moins de 1mM d'urée et pour l'autre 5 mM d'urée. Les ferments utilisés étaient constitués soit de la souche industrielle RD298 connue pour sa capacité à hydrolyser l'urée ur(+) soit de la souche 298-10, un mutant spontané de cette souche dépourvu de cette capacité d'hydrolyse de l'urée ur(-).

Les suivis d'acidification du lait contenant une quantité très faible d'urée (moins de 1mM) montrent que les deux souches mises en oeuvre permettent d'atteindre les pH cibles de chaque étape dans des temps approximativement identiques. De la même façon, ces objectifs sont atteints avec la souche 298-10 ur(-) lorsque le lait de fabrication contient des quantités significatives d'urée (5 mM). Au contraire, pour respecter les pH cibles de fabrication avec la souche RD298 dans le lait contenant 5 mM d'urée, les temps technologiques ont dû être considérablement allongés.

Cette étude démontre donc l'avantage technologique certain du mutant 298-10 ur(-) par rapport à la souche mère industrielle RD298 ur(+).

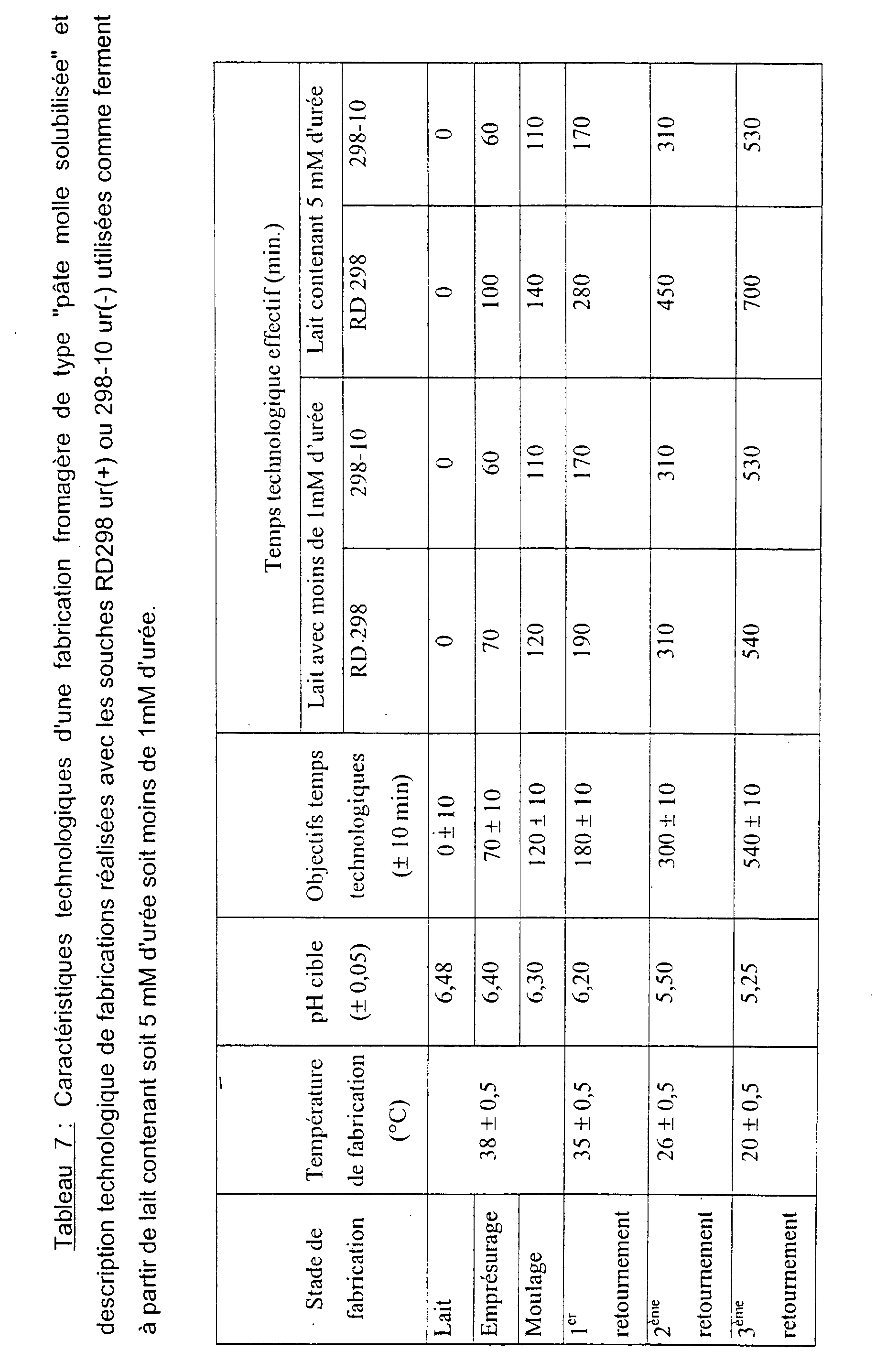

### BIBLIOGRAPHIE

- Juillard V., Desmazeaud M.J., Spinnler H.E. 1988. Mise en évidence d'une activité uréasique chez *Streptococcus thermophilus.* Canadian Journal of Microbiology. 34:818-822.
- Martin B., Coulon J.B., Chamba J.F., Bugaud C. 1997. Effect of milk urea content on characteristics of matured Reblochon cheeses. Lait. 77:505-514.
- Spinnler H.E., Corrieu G. 1989. Automatic method to quantify starter activity based on pH measurement. Journal of Dairy Research. 56:755-764.
- Terzaghi B.E., Sandine W.E. 1975. Improved medium for lactic streptococci and their bacteriophages. Applied Microbiology. 29:807-813.
- Tinson W., Broome M.C., Hillier A.J., Jago G.R. 1982a. Metabolism of *Streptococcus thermophilus.* 2. Production of CO2 and NH3 from urea. Australian Journal of Dairy Technology. 37:14-16.
- Tinson W., Ratcliff M.F., Hillier A.J., Jago G.R. 1982b. Metabolism of *Streptococcus thermophilus*. 3. Influence on the level of bacterial metabolites in cheddar cheese. Australian Journal of Dairy Technology. 37:17-21.

## Revendications

1. Utilisation d'au moins une souche *Streptococcus thermophilus* au moins partiellement, de préférence totalement, incapable d'hydrolyser l'urée, lors de la fabrication de fromages ou de produits laitiers fermentés tels que des yaourts, pour obtenir une cinétique d'acidification substantiellement indépendante de la teneur du lait en ses composants.

2. Utilisation selon la revendication 1, dans laquelle la cinétique d'acidification est substantiellement indépendante de la teneur en urée du lait.

3. Utilisation selon la revendication 1, dans laquelle la cinétique d'acidification du lait est substantiellement indépendante de la teneur en nickel ou en cobalt du lait.

4. Utilisation selon l'une des revendications précédentes, dans laquelle la cinétique d'acidification du lait ne présente pas de ralentissement temporaire.

5. Utilisation selon l'une quelconque des revendications précédentes, dans lequel la souche *Streptococcus thermophilus* est la souche 298-K déposée à la CNCM sous le numéro I-2311.

6. Utilisation selon l'une quelconque des revendications 1 à 4, dans laquelle la souche *Streptococcus thermophilus* est la souche 298-10 déposée à la CNCM sous le numéro I-2312.

7. Procédé pour obtenir, lors de la fabrication de fromages ou de produits laitiers fermentés tels que des yaourts, une cinétique d'acidification substantiellement indépendante de la teneur du lait en ses composants, dans lequel on incorpore au lait au moins une souche *Streptococcus thermophilus* au moins partiellement, de préférence totalement, incapable d'hydrolyser l'urée.

8. Procédé selon la revendication 7, dans lequel on incorpore au lait au moins une souche *Streptococcus thermophilus* mutante au moins partiellement, de préférence totalement, incapable d'hydrolyser l'urée, à un taux d'ensemencement inférieur au taux d'ensemencement utilisé pour la souche *Streptococcus thermophilus* parentale capable d'hydrolyser l'urée.

9. Procédé de sélection de souches *Streptococcus thermophilus* utiles lors de la fabrication de fromages ou de produits laitiers fermentés, comprenant :
- la comparaison de la cinétique d'acidification du lait en présence d'une souche à tester *Streptococcus thermophilus* mutante, au moins partiellement, de préférence totalement, incapable d'hydrolyser l'urée, permettant l'obtention d'une cinétique d'acidification substantiellement indépendante de la teneur du lait en ses composants,
avec la cinétique d'acidification du lait en présence d'une souche parentale de la souche mutante;
- la sélection des souches *Streptococcus thermophilus* mutantes capables d'acidifier un lait selon des cinétiques d'acidification variables par rapport aux cinétiques d'acidification des souches parentales.

## Patentansprüche

1. Verwendung wenigstens eines Stammes von Streptococcus thermophilus, der wenigstens partiell, bevorzugt vollständig, zur Hydrolyse von Harnstoff nicht fähig ist, bei der Herstellung von fermentierten Käsen oder Milchprodukten, wie bei Joghurts, um eine kinetische Ansäuerung, die im wesentlichen unabhängig von dem Gehalt von Milch an ihren Bestandteilen ist, zu erhalten.

2. Verwendung nach Anspruch 1, bei welcher die kinetische Ansäuerung im wesentlichen unabhängig von dem Gehalt der Milch an Harnstoff ist.

3. Verwendung nach Anspruch 1, bei welcher die kinetische Ansäuerung der Milch im wesentlichen unabhängig von dem Gehalt der Milch an Nickel oder Kobalt ist.

4. Verwendung nach einem der vorhergehenden Ansprüche, bei welcher die kinetische Ansäuerung der Milch keine temporäre Verlangsamung darstellt.

5. Verwendung nach einem der vorhergehenden Ansprüche, bei welcher der Stamm Streptococcus thermophilus der Stamm 298-K, hinterlegt bei der CNCM unter der Nummer I-2311, ist.

6. Verwendung nach einem der Ansprüche 1 bis 4, bei welcher der Stamm Streptococcus thermophilus der Stamm 298-10, hinterlegt bei der CNCM unter der Nummer I-2312, ist.

7. Verfahren, um bei der Herstellung von fermentierten Käsen oder Milchprodukten, wie bei Joghurts, eine kinetische Ansäuerung, die im wesentlichen unabhängig von dem Gehalt von Milch an ihren Bestandteilen ist, zu erhalten, bei welchem man der Milch wenigstens einen Stamm von Streptococcus thermophilus eingibt, der wenigstens partiell, bevorzugt vollständig, zur Hydrolyse von Harnstoff nicht fähig ist,

8. Verfahren nach Anspruch 7, bei welchem man der Milch wenigstens eine Mutante vom Stamm Streptococcus thermophilus, die wenigstens partiell, bevorzugt vollständig, zur Hydrolyse von Harnstoff nicht fähig ist, mit einem Impfgrad unterhalb des verwendeten Impfgrades für den Stamm Streptococcus thermophilus, der zur Hydrolyse von Harnstoff fähig ist, eingibt.

9. Verfahren zur Auswahl von Stämmen Streptococcus thermophilus, die bei der Herstellung von fermentierten Käsen oder Milchprodukten verwendet werden, umfassend:
- den Vergleich der kinetischen Ansäuerung der Milch in Anwesenheit einer zu untersuchenden, wenigstens partiell, bevorzugt vollständig, zur Hydrolyse von Harnstoff nicht fähigen Mutante des Stammes Streptococcus thermophilus, was den Erhalt einer von dem Gehalt der Milch an ihren Bestandteilen im wesentlichen unabhängigen kinetischen Ansäuerung erlaubt, mit der kinetischen Ansäuerung der Milch in Anwesenheit eines Elternstammes des Mutantenstammes;
- die Auswahl von Mutanten des Stammes von Streptococcus thermophilus, die zur Ansäuerung einer Milch gemäß variabler kinetischen Ansäuerung, bezogen auf kinetische Ansäuerung der Elternstämme, fähig sind.

## Claims

1. Use of at least one *Streptococcus thermophilus* strain, at least partially and preferably totally incapable of hydrolyzing urea, when making cheeses or fermented dairy products such as yoghurts, to achieve acidification kinetics substantially independent of the content of the milk in respect of its constituents.

2. Use according to Claim 1, in which the acidification kinetics are substantially independent of the urea content of the milk.

3. Use according to Claim 1, in which the acidification kinetics of the milk are substantially independent of the nickel or cobalt content of the milk.

4. Use according to one of the above claims, in which the acidification kinetics of the milk does not present any temporary slowing down.

5. Use according to any one of the above claims, whereby the *Streptococcus thermophilus* strain is the 298-K strain filed at the CNCM under No. I-2311.

6. Use according to any one of the Claims 1 to 4, whereby the *Streptococcus thermophilus* strain is the 298-10 strain filed at the CNMN under No. I-2312.

7. Process for achieving, when making cheeses or fermented dairy products such as yoghurts, acidification kinetics substantially independent of the milk content in respect of its constituents, whereby at least one *Streptococcus thermophilus* strain is incorporated in the milk, at least partially and preferably totally incapable of hydrolyzing urea.

8. Process according to Claim 7 whereby there is incorporated in the milk at least one mutant *Streptococcus thermophilus* strain, at least partially and preferably totally incapable of hydrolyzing urea, at a rate of culture below the rate of culture used for the parent *Streptococcus thermophilus* strain capable of hydrolyzing urea.

9. Process of selecting useful *Streptococcus thermophilus* strains when making cheeses or fermented dairy products, comprising:
- comparison of the acidification kinetics of the milk in the presence of a mutant *Streptococcus thermophilus* strain to be tested, at least partially and preferably totally incapable of hydrolyzing urea, enabling acidification kinetics to be obtained substantially independent of the content of the milk in respect of its constituents,
with the acidification kinetics of the milk in the presence of a parent strain of the mutant strain;
- selection of the mutant *Streptococcus thermophilus* strains capable of acidifying milk according to acidification kinetics variable in comparison with the acidification kinetics of the parent strains.
